# EUROPEAN PATENT APPLICATION

(11) **EP 4 736 627 A2**
(43) Date of publication of application: **06.05.2026**
(21) Application number: 26166097.1
(22) Date of filing: 08.07.2022
(51) Int. Cl.: A01D 46/24, A01G 3/08, A01D 45/00

(54) **HARVESTING DEVICE**

(30) Priority: 08.07.2021 NL 2028660
(62) Divisional of application: 22740915.8
(71) Applicant: Saia Holding B.V., 6711 WZ Ede (NL)
(72) Inventor: BARTH, Ruud, 3972 ES DRIEBERGEN-RIJSENBURG (NL); VAN TUIJL, Bart Adrianus Johannes, 6981 EB DOESBURG (NL)
(74) Representative: EP&C

(57) **Abstract**

The present invention relates to a harvesting device for harvesting horticultural produce, from plant stems in greenhouse cultivation, the device comprising a guiding member, which defines a through plant passage and which is configured to surround the plant stem at least partially in the plant passage during use, and a cutting member, which is attached to the guiding member and which is configured to cut peduncles of the produce that is attached to the plant stems, to separate them from the plant stems.

The plant stems are configured to be guided inside the guiding member upon relative movements of the harvesting device along the plant stem along a longitudinal axis and the cutting member is configured to cut the peduncles that pass the guiding member during movement of the harvesting device.

The harvesting device further comprises a storage member, which surrounds the guiding member at least partially and which is configured to collect the produce that is separated from the plant stems and preferably configured to drop off the side shoots and leaves.

## Description

### Field of the invention

The present invention relates to a harvesting for harvesting horticultural produce, side shoots and/or leaves from plant stems in greenhouse cultivation. The present invention further relates to a harvesting apparatus and to a method of horticultural produce, side shoots and/or leaves from plant stems in greenhouse cultivation.

### State of the art

At present, various types of harvesting apparatuses are known for use in greenhouse cultivation. A first example thereof is the so-called Sweeper harvesting robot developed, amongst others, by Wageningen University and Research (NL). This robot comprises a harvesting device attached to a manipulator arm, configured to move the harvesting device to horticultural produce, i.e. bell peppers, on the basis of a sensor signal and wherein the harvesting device is configured to cut the produce from the plant and to transport it to a storage by means of the manipulator arm.

This Sweeper robot has the drawback that it first needs to find the stem of the plant with its sensors, then needs to follow the stem by means of the sensors to find any ripe produce. After harvesting, the harvesting device needs to catch the produce that was cut and needs to move it towards a storage by means of the manipulator arm. This all has the drawback that the Sweeper robot is relatively slow in operation.

Another example of a cutting apparatus is known from Dutch Patent NL1024702C2, which discloses a manipulator arm and a cutting device that surrounds the plant stem and that is configured to be moved along the plant stem. This cutting device is able to cut leaves and side shoots of the plants, but is unable to harvest produce from the plant. Hence, cut parts of the plants, i.e. the leaves and the side shoots, merely fall on the greenhouse floor. In case produce is cut, this system comprises no means to process the produce that was cut, for example for packaging and/or further processing.

Finally, WO 2005/058013 A1 discloses a device for harvesting tomatoes from a tomato plant, comprising a positioning member with a gripper member for gripping a stem of the tomato plant and a separating member formed by tray parts. During harvesting with this device, the plant stem is clamped and the tray parts are moved upwards to separate the tomatoes from the plant stem. This known harvesting device has the drawback that the plant stem needs to be clamped to exert the upward cutting force onto the tomatoes to effect separation thereof from the plant stem.

### Object of the invention

It is therefore an object of the invention to provide a harvesting device that is able to harvest horticultural produce is a more efficient manner, or at least to provide an alternative harvesting device.

### Detailed description

The present invention provides a harvesting device for harvesting horticultural produce, side shoots and/or leaves from plant stems in greenhouse cultivation in accordance with claim 1.

The device comprises:
- a guiding member, which defines a through plant passage and which is configured to surround the plant stem at least partially in the plant passage during use, and
- a cutting member, which is attached to the guiding member and which is configured to cut peduncles of the produce, the side shoots and/or petioles of the leaves that are attached to the plant stems, to separate them from the plant stems,
   wherein the plant stems are configured to be guided inside the guiding member upon relative movements of the harvesting device along the plant stem along a longitudinal axis, i.e. in an upward vertical direction, and wherein the cutting member is configured to cut the peduncles, the side shoots and/or the petioles that pass the guiding member during movement of the harvesting device, characterized in that the harvesting device further comprises:
- a storage member, which surrounds the guiding member at least partially and which is configured to collect the produce that is separated from the plant stems and preferably configured to drop off the side shoots and leaves.

The harvesting device according to the present invention is configured to be moved along the plant stem, during which the plant stem is substantially enclosed in the through plant passage. With substantially enclosed, it is meant that the plant stem may be either completely surrounded by the guiding member or that it may be surrounded partly by the guiding member.

The harvesting device is configured to receive the plant stem inside the plant passage of the guiding member. The passage extends along the longitudinal axis, so that the plant stem extends along the longitudinal axis as well. The longitudinal axis may be aligned substantially vertically and upward, but may also have a component in a horizontal direction, for example being aligned at an angle between 0° and 20° with respect to an upward vertical direction.

The harvesting device is configured to be guided with respect to the plant stem as a result of the plant stem being received in, i.e. at least partly surrounded by the through plant passage in the guiding member.

With being guided, it is meant that either the harvesting device is moved with respect to its surroundings and that the plant stem follows the movement of the guiding member, for example that the harvesting device is moved upward, for example along the longitudinal axis, and that the plant is moved sideways as the result of its guidance in the through plant passage. Additionally, the harvesting device may also be actively moved in directions having at least a component perpendicular to longitudinal axis, so that the harvesting device can actively follow any bends or curves in the plant stem.

Alternatively, it is meant with being guided that the harvesting device is held substantially stationary and that the plant is displaced in the through plant passage, for example being raised or lowered therein. For example, the harvesting device may be held stationary in directions parallel to the longitudinal axis, but may optionally be actively moved in directions having at least a component perpendicular to longitudinal axis, so that the harvesting device can actively follow any bends or curves in the plant stem.

The cutting member of the harvesting device is attached to the guiding member and is thus also configured to be moved relative to the plant stem in conjunction with the guiding member. The cutting member may be provided to at least partly surround the through plant passage in a way similar to the surrounding of the guiding member.

Upon relative movement between the plant stem and the harvesting device, e.g. movement of the harvesting device along the plant stem, the harvesting device may encounter horticultural produce, such as tomatoes, for example vine tomatoes, bell peppers, eggplants and cucumbers that are attached to the plant stem by means of peduncles. Similarly, the plant stem may have undesired side shoots attached to it and may have leaves attached to it by means of petioles, e.g. for example three leaves in between each vine of tomatoes, that both need to be removed during growth of the plant.

The cutting member is configured to cut-off all of these peduncles, side shoots and petioles that come to face the cutting member when the harvesting device is moved with respect to the plant stem, e.g. to perform a so-called stripping action onto the plant stem. The peduncles, side shoots and petioles sidewardly project away from the plant stem, for example horizontally away from the plant stem, so that they are disposed wider than the plant stem itself.

The cutting member may be spaced at a distance from the through plant passage in the guiding member, to avoid that the plant stem itself is being cut, but that, instead, only the outwardly-protruding peduncles, side shoots and petioles are cut. However, the cutting member is on the other hand configured to make the cuts as close to the plant stem as possible, so that any remaining stub on the plant stem after cutting is as short as possible.

The harvesting device according to the present invention additionally comprises the storage member, which forms part of the harvesting device, to be moved with respect to the plant stem. The storage member surrounds the guiding member, for example in a way similar the guiding member surrounds the through plant passage. The storage member may be arranged to substantially enclose the plant stem, which means that the plant stem may be either completely surrounded by the storage member or that it may be surrounded partly by the storage member.

The storage member projects away from the guiding member and the cutting member in directions radial to the longitudinal axis. In this way, it is affected that the storage member may have a larger contour or footprint than the guiding member and the cutting member. This larger contour ensures that the storage member project underneath the horticultural produce, which produce is located radially outside the cutting member. After cutting, the horticultural produce can then be caught on the storage member to prevent it from falling on the ground and to prevent grabbing of the produce, prior to cutting, and actively removal of the produce, after cutting, as was required according to the prior art.

The storage member is configured to autonomously collect the horticultural produce that has been cut off from the plant stem by the cutting member, e.g. without requiring active steps in terms of movement of the storage member towards the produce. The storage member may thereto be located underneath the cutting member, so that the produce may drop onto the storage member after cutting under the influence of gravitational forces acting onto the produce. The storage member is preferably located underneath the entire cutting member, so that all produce, e.g. irrespective of with which part of the cutting member is was cut off, will become collected on the storage member.

The storage member is preferably configured to drop off the side shoots and leaves, since these are not desired to be stored. Instead, side shoots and leaves are undesired side products without significant value, which not need to be maintained, but which are cut by the cutting member after all. The side shoots and leaves may have geometries, sizes and/or weight that differ from that of the produce, which implies that the storage member may be dimensioned, such that only the produce is collected thereon and that the side shoots and leaves can drop off.

As an example, tomato leaves have a somewhat triangular shape with a size of approximately 50 centimetres, whereas a vine of tomatoes is approximately elongate with a length of 20 centimetres and a weight that is approximately 10 times higher. The storage member may thereto have a width of approximately 20 centimetres, so that the centre of gravity of the vine of tomatoes falls within the contour of the storage member, whereas the centre of gravity of the leave falls outside the contour of the storage member, so that the leave will tilt over the outer edge of the storage member after having dropped thereon and that the leaves will fall from the storage member accordingly.

In an embodiment, the storage member is rotatable relative to the guiding member and/or the cutting member about the longitudinal axis. This rotation may effect that after produce has been collected on the storage member in a specific location, the storage member can be rotated so that a new and non-occupied part of the storage member comes to face the part of the guiding member and/or the cutting member where subsequent produce is to be cut and collected. In this way, multiple cutting steps can be undertaken subsequently without requiring emptying of the storage member in between each two subsequent cutting steps.

The rotation of the storage member relative to the guiding member and/or the cutting member may be facilitated by a bearing, such as an annular bearing provided in between the guiding member and the storage member and/or between the cutting member and the storage member. An electric motor may be provided to actively actuate the rotation.

In a further embodiment, the harvesting device is configured to rotate the storage member relative to the plant stem. The storage member may be rotated about the longitudinal axis and the rotation may involve rotation of the storage member alone, for example relative to the cutting member and/or the guiding member. Alternatively, the rotation may involve rotation of the entire harvesting device, including the storage member.

The harvesting device may be configured to rotate the storage member in dependence of a sensor signal representing the location of a subsequent piece of produce that is to be harvested. The storage member may thereto be rotated such, that a non-occupied part of the storage member can be positioned underneath the produce. This may provide the benefit that the produce is received on an empty portion of the storage member, instead of on top of a piece of produce that has been harvested before.

The rotation of the storage member and/or of the entire harvesting device may be effected relative to a support, such as a frame element and/or an actuator device, such as a manipulator arm, to which the harvesting device is attached during use.

In an embodiment, the storage member may have a symmetric shape, seen with respect to the longitudinal axis. For example, the storage member may have a circular shape, seen along the longitudinal axis, so that the storage member is rotationally symmetric about the longitudinal axis.

This symmetry may provide the benefit that the storage member is able to store the produce after cutting, irrespective of the mutual orientation between the produce and the storage member, especially irrespective of a rotational position of the storage member about the longitudinal axis.

In an embodiment, the storage member has a width perpendicular to the longitudinal axis, i.e. a diameter, of more than 30 centimetres, preferably more than 60 centimetres, for example about 90 centimetres. It was found that a storage member with a width in this range is beneficial in supporting a sufficient amount of produce.

In an embodiment, the harvesting device is free of a clamping device, so that cutting of the peduncles, side shoots and/or petioles may be carried out solely under influence of gravitational forces acting thereon. During use, the plant stem will be located inside the guiding member during cutting, but will not be clamped. Instead, the peduncles, side shoots and/or petioles may encounter the cutting member and will be separated from the plant stem since the required cutting force will be smaller than the gravitational force acting on the peduncles, side shoots and/or petioles.

In an alternative embodiment, the harvesting device further comprises a side aperture, which provides access to the plant passage in an access direction substantially perpendicular to the longitudinal axis to allow entry in and exit from the plant stem in the plant passage in the access direction. According this embodiment, the guiding member, the cutting member and the storage member form a unitary harvesting device, i.e. not being hingably connected to each other to allow entry of a plant into the plant passage. The side opening is provided to allow access towards the plant passage from the side, to allow for entry and exit of plant stems in the plant passage. This may offer the benefit that the harvesting device can be embodied less complex and more robust, to improve the reliability thereof.

In an embodiment, the cutting member is, seen in the radial direction, spaced at a distance from the plant passage, and the distance is preferably selected in the range between 5 mm and 15 mm.

The spacing between the plant passage, e.g. being delimited by the guiding member, and the cutting member provides that the plant stem can never be in direct contact with the cutting member, because the plant stem would always contact the guiding member before contacting the cutting member. Instead, the distance between the plant passage The cutting member may be spaced at a distance from the through plant passage in the guiding member, to avoid that the plant stem itself is being cut, but that, instead, only the outwardly-protruding peduncles, side shoots and petioles are cut. By selecting the distance appropriately, for example in the range between 5 mm and 15 mm, it may be provided that the cutting member is configured to make the cuts as close to the plant stem as possible, so that any remaining stub on the plant stem after cutting is as short as possible.

In an embodiment of the harvesting device , e.g. according to claim 1, the guiding member is crown-shaped, comprising:
- a plurality of tips, which are aligned upwardly and substantially parallel to the longitudinal axis and which are spaced around the circumference of the plant passage, and
- a respective tapered guiding valley in between each two adjacent tips.

The crown-shape is configured to effect sideways guiding of the peduncles, side shoots and petioles as a result of the tapered guiding valleys in between each two adjacent tips. Hence, in principle, peduncles, side shoots and petiole could be arranged around the entire circumference of the plant stem. With the crown-shape, the peduncles, side shoots and petioles are guided to certain discrete locations in the valleys, where the cutting member is provided. As a result, the cutting member does not need to be arranged around the entire circumference of the plant passage, but instead only at the location to which the peduncles, side shoots and petioles are guided.

If, during use of the harvesting device, the peduncles, side shoots and petioles are already located in a valley during movement of the harvesting device, they may converge towards the bottom of the valley. If the peduncles, side shoots and petioles end up on top of the tips, the rocking mechanism may rock the harvesting device, so that the peduncles, side shoots and petioles become located in the valleys after all.

In a further embodiment, the guiding valleys are U-shaped or V-shaped, seen in the radial direction. Both the U-shape and the V-shape converge towards a central point at the bottom, so that, accordingly, the peduncles, side shoots and petioles are guided towards this central point during the upward movement of the harvesting device relative to the plant stem. This may provide a further benefit, since the peduncles, side shoots and/or petioles may be prevented from rotating relative to the guiding member. Instead, the guiding valleys, especially the V-shaped guiding valleys, may clamp the peduncles, side shoots and/or petioles up to a certain extent, to be able to cut them more reliable and at a relatively short distance from the stem. Especially, the guiding valleys may sidewardly confine the position of the peduncles, side shoots and/or petioles to prevent sideward shifting thereof during cutting.

In an additional or alternative embodiment, the cutting member comprises a respective cutting device in each of the guiding valleys. In this way, the peduncles, side shoots and petioles automatically encounter a respective cutting device at the bottom of the valley, so that they are cut as soon as they reach the bottom of the valley.

In this embodiment, the cutting devices are only located at the bottoms of the valleys, which is only a fraction of the entire circumference of the plant passage, which enables that only certain parts of the circumference of the storage member receive harvested produce. **In** combination with a rotatable storage member, the harvested produce may be spread over the entire circumference of the storage member, thereby increasing its capacity. therefore

Each cutting device may be a cutting blade, for example comprising teeth that face upward along the longitudinal axis, so that the peduncles, side shoots and petioles are cut by means of the teeth.

The combination of having guiding valleys and cutting device at the bottom of the guiding valleys may provide the benefit that all mutual forces between the peduncles, side shoots and/or petioles may be aligned substantially in the upward vertical direction, i.e. opposite to the gravitational forces acting thereon, due to the confining done inside the guiding valleys. Especially, the sideward confining in the guiding valleys may prevent sideward shifting of the peduncles, side shoots and/or petioles during cutting. This may increase a net cutting force of the cutting device acting on the peduncles, side shoots and/or petioles, to improve the cutting thereof.

In an embodiment of the harvesting device, e.g. according to the preamble of claim 1, the cutting member, e.g. each of the cutting devices, is an oscillatory cutting member, for example a sonic or ultrasonic cutting member. The cutting devices are thereby movable, for example configured to vibrate or oscillate inside the valleys. Such oscillations of the cutting device improve the cutting action and reduce the upward force that needs to act upon the plant stem by the harvesting device.

In an alternative embodiment of the harvesting device, e.g. according to the preamble of claim 1, the cutting member, e.g. each of the cutting devices, is a rotary cutting member, for example a rotary knife. Such a rotary cutting member may be embodied as a toothed rotary cutting member. The benefit of a rotary cutting member is that the reversals in movement direction occurring in oscillatory cutting members do not occurs, which further improves the cutting action by reducing the risk of jamming of the knife in case the harvesting is moved upward relative to the plant stem too fast.

Alternatively, the cutting devices may be stationary mounted to the guiding member, for example being mounted fixedly in each of the valleys.

According to a second aspect, the present invention provides a harvesting apparatus in accordance with claim 9.

The harvesting apparatus comprises a base, the harvesting device as described herein and an actuator device, configured to move the harvesting device relative to the base to move the harvesting device relative to the plant stem along the longitudinal axis.

The harvesting apparatus may have similar characteristics and benefits as the harvesting device according to the first aspect of the invention as described herein.

The base of the harvesting apparatus may be configured to remain stationary during cutting with the harvesting device, but may be movable to move the harvesting device between plants, e.g. from a first plant stem to a second plant stem.

During cutting, the actuator device is configured to move the harvesting with respect to the base, preferably in a substantial upward vertical direction. This movement may affect the relative movement along the plant stem, which may be held stationary, to perform the cutting of the peduncles, side shoots and petioles with the harvesting device.

According to a further aspect, the present invention provides a method of harvesting horticultural produce, side shoots and leaves from plant stems in greenhouse cultivation, for example by means of a harvesting device and/or harvesting apparatus as described herein in accordance with claim 10.

The harvesting method comprises the steps of:
- surrounding the plant stem at least partially in a plant passage by a guiding member of a harvesting device,
- moving the harvesting device along the plant stem along a longitudinal axis,
- guiding peduncles of the produce, the side shoots and/or petioles of the leaves that are attached to the plant stem by the guiding member,
- cutting the peduncles, the side shoots and/or the leaves by means of a cutting member of the harvesting device, to separate them from the plant stem, and
- collecting the produce that is separated from the plant stems in a storage member of the harvesting device.

The harvesting method may have similar characteristics and benefits as the harvesting device according to the first aspect of the invention as described herein.

In an embodiment, the method further comprises the step of rotating the storage member relative to the plant stem. The storage member may be rotated about the longitudinal axis, for example prior to the step of moving the harvesting device along the plant stem. The rotation may involve rotation of the storage member alone, but may also comprise rotating of the entire harvesting device, including the storage member.

The step of rotating may especially be carried out in dependence of a sensor signal representing the location of a subsequent piece of produce that is to be harvested. The storage member may thereto be rotated such, that a non-occupied part of the storage member can be positioned underneath the produce. This may provide the benefit that the produce is received on an empty portion of the storage member, instead of on top of a piece of produce that has been harvested before.

The rotating of the storage member may be adjusted in dependence of the produce and/or the storage member. If, for example, the storage member were to be relatively wide and/or when the produce is relatively small, the angle of rotation of the storage member between harvesting subsequent pieces of produce may be relatively small. Should the storage member be relatively small and/or should the produce be relatively large, the angle of rotation of the storage member may be set relatively large.

In a further embodiment, the method further comprises the step of detecting a location of a piece of produce that is to be harvested and of emitting a position sensor signal representing the position of that piece of produce, wherein the step of rotating the storage member comprising rotating of the storage member in dependence of the position sensor signal.

The storage member may thereto be rotated such, that a non-occupied part of the storage member can be positioned underneath the produce. This may provide the benefit that the produce is received on an empty portion of the storage member, instead of on top of a piece of produce that has been harvested before.

### Brief description of drawings

Further characteristics of the invention will be explained below, with reference to embodiments, which are displayed in the appended drawings, in which:
Figures 1a - 1d schematically depict several different plants with produce,
Figure 2a depicts a perspective view on an embodiment of the harvesting device according to the present invention,
Figure 2b depicts a top view on the harvesting device of figure 2a,
Figure 2c depicts a side view on the harvesting device of figure 2a during use,
Figure 3 schematically depicts the use of the harvesting device,
Figure 4 schematically depicts several possibilities of receiving a plant stem in the harvesting device,
Figure 5 schematically depicts several different harvesting devices with different skirt angles, and
Figures 6a - 6b schematically depict optional design features of the harvesting device.

Throughout the figures, the same reference numerals are used to refer to corresponding components or to components that have a corresponding function.

### Detailed description of embodiments

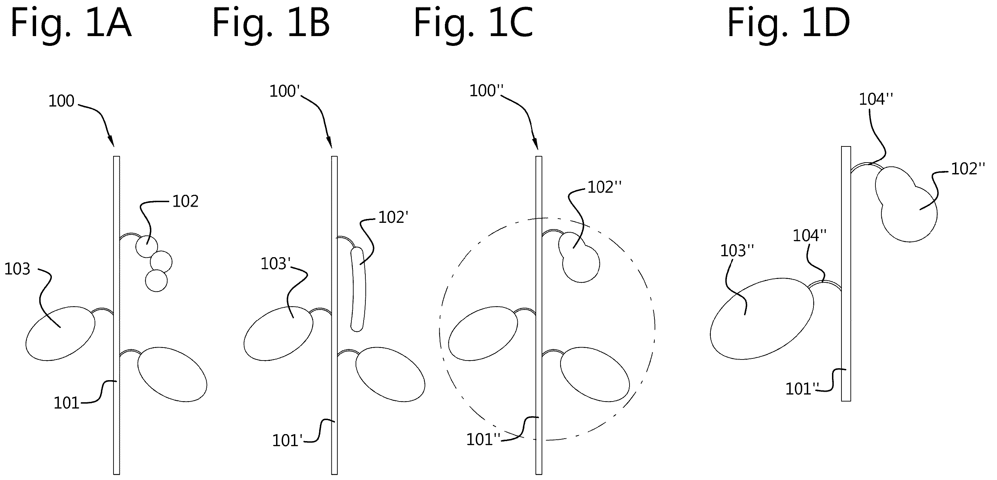

Figures 1a - 1d schematically depict various types of plants 100 that are grown in greenhouse cultivation, each comprising a plant stem 101, which carries horticultural produce 102, leaves 103 and side shoots. Figure 1a shows a tomato plant 100, carrying vines of tomatoes 102. Figure 1b shows a cucumber plant 100', carrying cucumbers 102' and figure 1c shows an eggplant 100". Figure 1d is a magnification of the encircled area in figure 1c, which shows that the leaves 103" are attached to the plant stem 101" by means of petioles 104" and that the produce, e.g. the eggplants 102", is attached to the plant stem 101" by means of peduncles 105".

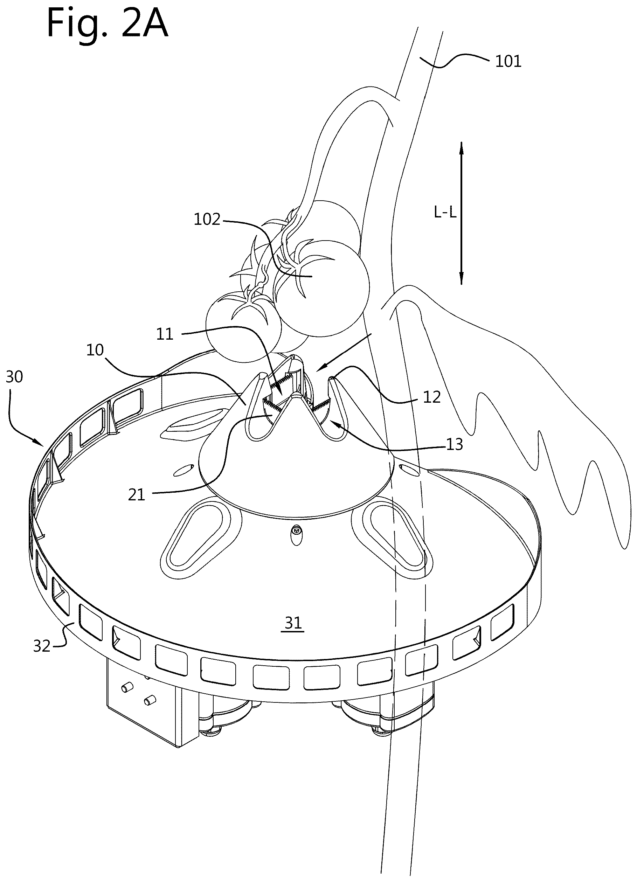

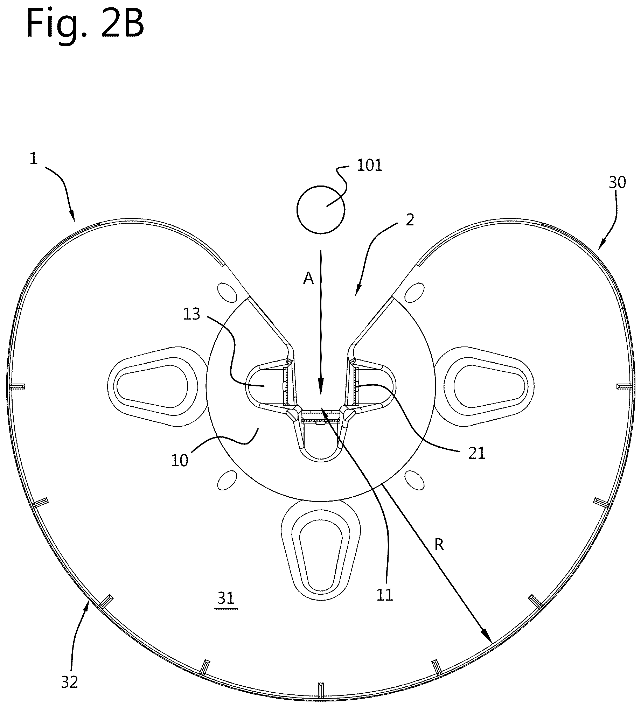

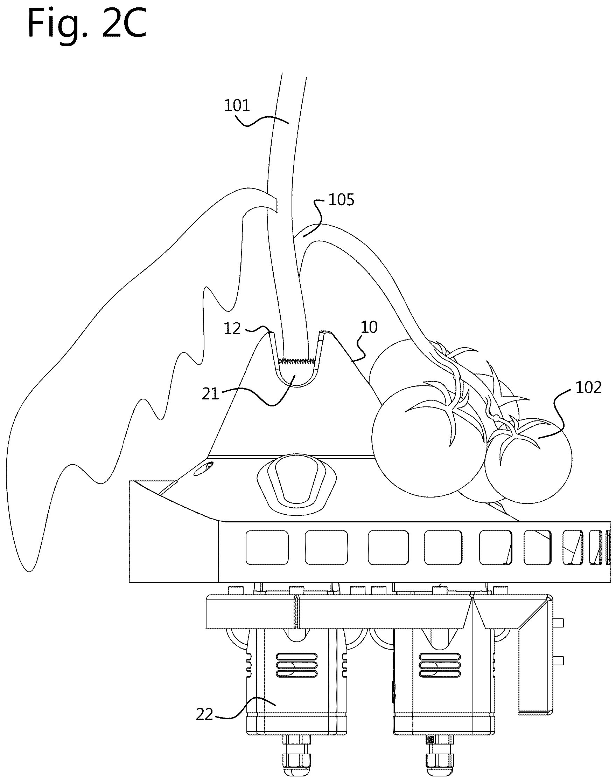

Figures 2a, 2b and 2c show an embodiment of the harvesting device according to the present invention, to which is referred with reference numeral 1. The harvesting device 1 comprises a crown-shaped guiding member 10, which defines a through plant passage 11. The harvesting device 1 is configured to receive the plant stem 101 inside the plant passage 11 of the guiding member 10. The passage 11 extends along the longitudinal axis L-L, so that the plant stem 101 extends along the longitudinal axis L-L as well. The longitudinal axis L-L is, in the present embodiment, aligned substantially vertically and upward.

The harvesting device 1 is configured to be guided with respect to the plant stem 101 as a result of the plant stem 101 being received in, in particular being partly surrounded by the through plant passage 11 in the guiding member 10. According to the present embodiment, the harvesting device 1 is moved with respect to its surroundings and the plant stem 101 follows the movement of the guiding member 10.

The guiding member 10 comprises four tips 12, which are aligned upwardly and substantially parallel to the longitudinal axis L-L and which are spaced around the circumference of the plant passage 11. The guiding member 10 further comprises three tapered guiding valleys 13 in between the tips 12.

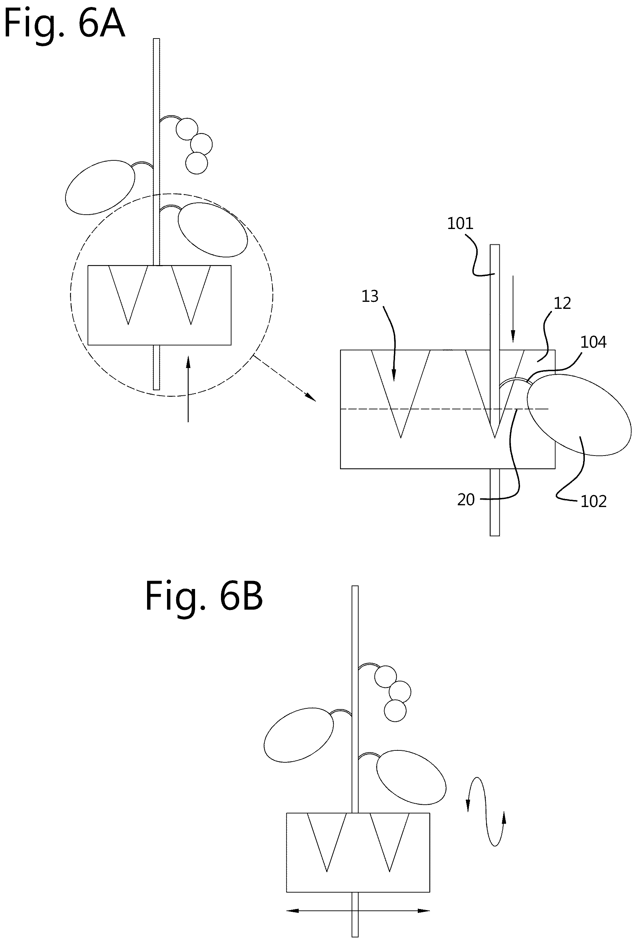

The crown-shape is configured to effect sideways guiding of the peduncles 105, side shoots and petioles 104 as a result of the tapered guiding valleys 13 in between each two adjacent tips 12. With the crown-shape, the peduncles 105, side shoots and petioles 104 are guided to certain discrete locations in the valleys 13, where a cutting member 20 is provided, as is shown schematically in figure 6a. As a result, the cutting member 20 not needs to be arranged around the entire circumference of the plant passage 11, but instead only at the location to which the peduncles 105, side shoots and petioles 104. In figures 2a - 2c, the valleys 13 are shown to be U-shaped.

Alternatively, the valleys may be V-shaped, as is shown schematically in figure 6a. It is shown in figure 6b that the harvesting device may comprise a rocking mechanism, which is configured to tilt the harvesting device 1, shown by means of the waved line, with respect to a horizontal tilting axis. The tilting may contribute in the guiding of the peduncles 105, side shoots and petioles 104 of the plant 100 into the valleys and towards the cutting member.

The harvesting device 1 further comprises a cutting member 20, which is attached to the guiding member 10 and which is configured to cut the peduncles 104, the side shoots and the petioles 104 that pass the guiding member 10 during movement of the harvesting device 1 along the plant stem 101. The cutting member 20 is configured to be moved relative to the plant stem 101 in conjunction with the guiding member 10 and partly surrounds the through plant passage 11 in a way similar to the surrounding by the guiding member 10.

Upon relative movement between the plant stem 101 and the harvesting device 1 along the plant stem 101, the harvesting device 1 encounters the produce 102, the side shoots and leaves 103. The cutting member 20 is configured to cut-off all of these when they come to face the cutting member 20 when the harvesting device 1 is moved with respect to the plant stem 101, e.g. to perform a so-called stripping action onto the plant stem 101.

In the embodiment of figures 2a - 2c, the cutting member 20 comprises a respective cutting device 21 in each of the guiding valleys 13. In this way, the peduncles 105, side shoots and petioles 104 automatically encounter a respective cutting device 21 at the bottom of the valley 13, so that they are cut as soon as they reach the bottom of the valley 13. Each cutting device is embodied as a cutting blade 21, comprising teeth that face upward along the longitudinal axis L-L, so that the peduncles 105, side shoots and petioles 104 are cut by means of the teeth.

In the embodiment in figures 2a - 2c, the cutting member 20 is an oscillatory cutting member, comprising a plurality of oscillatory actuators 22, positioned below the guiding member 10, each being connected to its own respective cutting blade 21 to oscillate the cutting blade 21 within the respective valley 13. Alternatively, the cutting member may be provided as a rotary cutting member.

The harvesting device 1 further comprises a storage member 30, which is configured to collect the produce 102 that is separated from the plant stems 101 and configured to drop off the side shoots and leaves 103. The storage member 30 surrounds the guiding member 10 in a way similar the guiding member 10 surrounds the through plant passage 11.

The storage member 30 projects away from the guiding member 10 and the cutting member 20 in directions radial R to the longitudinal axis L-L, as is best shown in figure 2b. The storage member 30 thus has a larger footprint than the guiding member 10 and the cutting member 20. This larger contour ensures that the storage member 10 project underneath the horticultural produce 102, which produce 102 is located radially outside the cutting member 20, as is shown in figure 2c.

After cutting, the horticultural produce 105 is caught on the storage member 30. The storage member 30 is configured to autonomously collect the horticultural produce 102 that has been cut off from the plant stem by the cutting member 20, e.g. without requiring active steps in terms of movement of the storage member 30 towards the produce 102. The produce 102 in particular drops onto the storage member 30 after cutting under the influence of gravitational forces acting onto the produce 102. The storage member 30 is configured to drop off the side shoots and leaves 104, since these are not desired to be stored.

The storage member 30 comprising an at least partially cone-shaped skirt surface 31, which tapers outwardly in the radial direction R upon increasing distance from the cutting member 20 in the downward vertical direction. The skirt surface 31 surrounds the guiding member 10 and the cutting member 20 and forms a support surface for the produce 102 to land on after cutting and to be collected for further handling.

The storage member 30 further comprises a circumferential ridge 32 at the bottom edge of the skirt surface 30, which is configured to prevent the produce 102 from falling off the skirt surface 31 at the bottom.

The harvesting device 1 shown in figures 2a - 2c comprises a side aperture 2, which provides access to the plant passage 11 in an access direction A substantially perpendicular to the longitudinal axis L-L to allow entry in and exit from the plant stem 101 in the plant passage 11 in the access direction A. The guiding member 10, the cutting member 20 and the storage member 30 thereby form a unitary harvesting device 1.

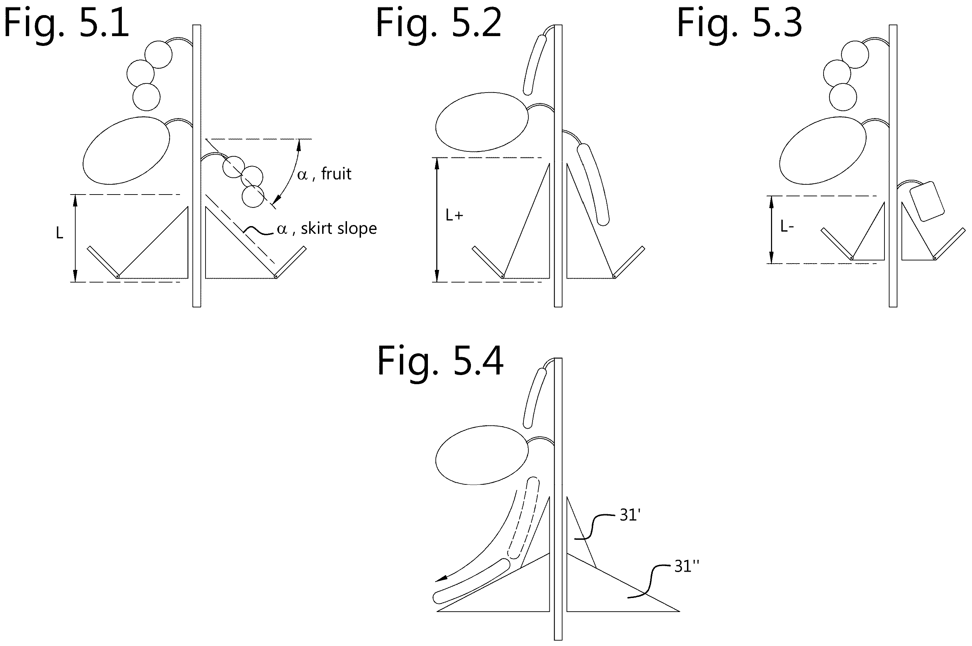

It is shown schematically in figure 5 that the skirt surface 31 is set at a skirt angle (α_{skirt, slope}) with respect to the longitudinal axis L-L, which skirt angle (α_{skirt, slope}) is selected in the range between 30° and 60°. The skirt angle (α_{skirt, slope}) can be varied to alter the steepness of the skirt surface 31 and therefor changes the properties of the storage member 30.

The skirt angle (α_{skirt, slope}) is selected to optimally support the produce 102 after cutting and to avoid the produce 102 from falling onto the skirt surface 31. The skirt angle (α_{skirt, slope}) can be selected in dependence of the type of produce 102 that is to be harvested, so that the skirt surface 31 may be aligned substantially parallel to an elongate direction in which the produce 102 substantially extends.

For example, cucumbers, as shown in no. [2] in figure 5, hang almost vertically from the plant stem, which implies that the skirt angle (α_{skirt, slope}) is then selected relatively small. However, vine tomatoes, in no. [01], grow at an angle (α_{fruit}) more horizontally than cucumbers, which implies that the skirt angle (α_{skirt, slope}) can be selected larger in case the harvesting device 1 is used for harvesting tomatoes.

In a way similar to the selection of the skirt angle (α_{skirt, slope}), may the height L of the skirt surface 31 be selected on the basis of the length of the produce that is to be harvested. For tomatoes, as shown in no. [1] in figure 5, the height L may be selected average. If the harvesting device 1 is used for harvesting cucumbers, as shown in no. [2], the height L+ can be selected larger than the height L- of a harvesting device that is used to harvest bell peppers, as shown in no. [3], which are shorter than cucumbers.

It is shown schematically in no. [4] of figure 5 that the skirt surface 31 may comprise a first skirt section 31, which is located directly below the guiding member and forms an initial support for the produce 102, prior to being cut by the cutting device. The skirt surface 31 may further comprise a second skirt section 31" that is aligned more horizontally than the first skirt section 31', e.g. having a large skirt angle than the first skirt section 31', to that the cut produce 31 will slow down after sliding from the first skirt section 31' and that the produce is collected on the second skirt section 31".

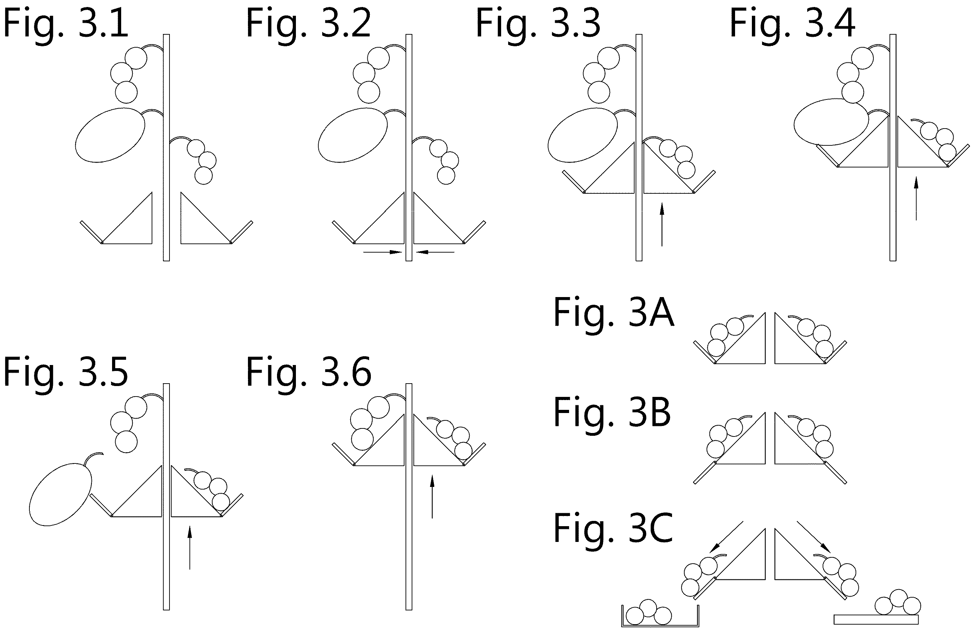

Figure 3 schematically shows operation of the harvesting device, used for harvesting vine tomatoes and for cutting leaves from the tomato plant stem. At step [1], the harvesting device is arranged in place around the plant stem and at step [2], first and second harvesting device parts are brought towards each other to enclose the plant stem.

At step [3], the harvesting devices is moved upward along the plant stem. The cutting member of the harvesting device is represented by means of the dashed line, which cutting member has encountered a vine of tomatoes at step [4]. The cutting member has cut the peduncle to effect that the vine of tomatoes become arranged on the storage member.

At step [5], the cutting member encounters a leaf of the tomato plant, which is also cut by the cutting member, but which does not drop on the storage member, but instead tilts over the outer edge of the storage member. Hence, tomato leaves have a somewhat triangular shape with a size of approximately 50 centimetres, whereas a vine of tomatoes is approximately elongate with a length of only 20 centimetres and a weight that is approximately 10 times higher than that of the leave. The storage member has a width that is such that the centre of gravity of the vine of tomatoes falls within the contour of the storage member, whereas the centre of gravity of the leave falls outside the contour of the storage member, so that the leave will tilt over the outer edge of the storage member after having dropped thereon and that the leaves will fall from the storage member accordingly.

At step [6], finally, the harvesting device detects with a sensor device that the next vine of tomatoes is not yet ripe, e.g. having a green instead of red colour. Accordingly, the harvesting device is not moved upward along the plant stem any further, because this unripe vine may not yet be harvested.

Step [A] in figure 5 shows the harvesting device with the vine of tomatoes on the storage member. The harvesting device may comprise a release device, which is configured to allow for gravity-based unloading, of the storage member. The release device is embodied as a movable ridge of the storage member, which is closed during cutting with the harvesting device, e.g. to prevent the produce from falling off, as is shown in step [A]. The movable ridge can be opened, as shown in step [B], and the produce is allowed to slide off from the skirt surface in a controlled manner, as shown in step [C], to discharge the produce for packaging and/or further processing. At step [C] in figure 5, it is shown that the produce may for example be discharge in a packaging, e.g. as shown on the left, or on a conveyor belt, as shown on the right.

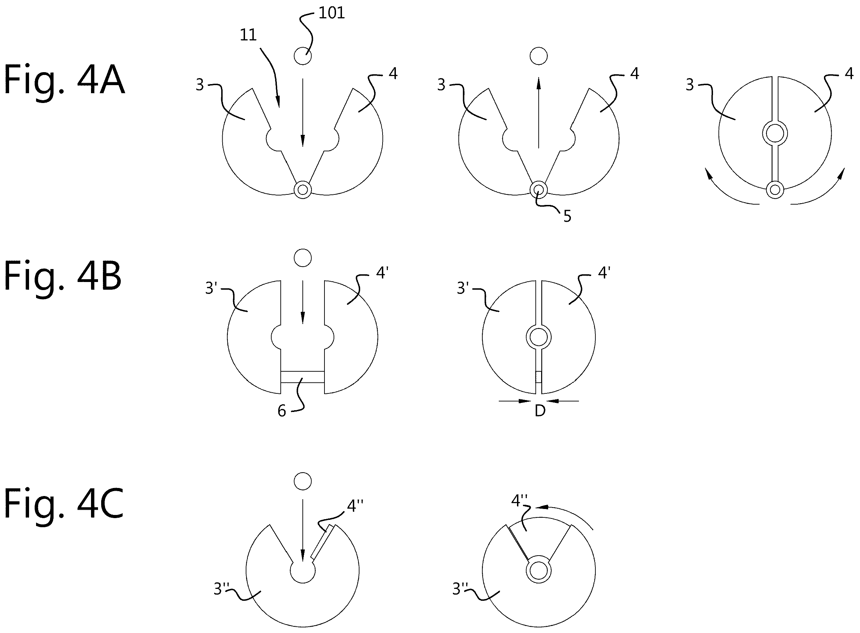

Figures 4a - 4c show alternative embodiments of the harvesting device, which fully enclose the plant stem during use for harvesting produce. In these harvesting devices, the guiding member, the cutting member and the storage member are together subdivided in a first device part 3 and in a second device part 4.

The separation of the harvesting device in the first device part 3 and the second device 4 part is done in a plane parallel to the longitudinal axis, so that the separation between the parts is visible in the plane perpendicular to the longitudinal axis, for example when looking downward onto the harvesting device as in figures 4a - 4c.

In figures 4a - 4c, a relative displacement between the plant stem and the harvesting device is shown. This may imply that the plant stem is stationary and that the harvesting device is moved towards the plant stem. Alternatively, it may imply that the harvesting device is stationary and that the plant stem is moved towards the harvesting device. As a further alternative, both the plant stem and the harvesting device may be movable.

The first device part 3 is an integral part of a first guiding member part, a first cutting member part and a first storage member part. The second device part 4 is an integral part of a second guiding member part, a second cutting member part and a second storage member part. The integral first device part 3 is entirely separable from and movable relative to the integral second device part 4.

The first device part 3 and the second device 4 can be moved away from each other in an opened configuration to allow entry in and exit from the plant stem 101 in the plant passage 11 in a radial direction perpendicular to the longitudinal axis. In figures 4a - 4c, the left image shows the device parts 3, 4 in the opened configuration, displaying entry of the plant stem 101.

The first device part 3 and the second device 4 can be moved towards each other in a closed configuration, in which the first device part 3 and the second device part 4 are arranged against each other, to fully enclose the plant passage 11, i.e. to fully surround the plant stem 101. On the right, in figures 4a - 4c, the first device part 3 and the second device 4 are shown in the closed configuration.

Figure 4a shows a first option for how the harvesting device can be subdivided in a first device part 3 and a second device part 4. In this embodiment, the first device part 3 and the second device part 4 are, upon movement between the opened configuration and the closed configuration rotatable relative to each other about an axis of rotation parallel to the longitudinal axis. The device parts 3, 4 are thereby attached to each other by means of a hinge 5 to allow the relative rotation between them. The hinge 5 is the sole connection between the device parts 3, 4in the opened configuration, e.g. on the left in figure 4a, in which the device parts 3, 4 have rotated away from each other about the axis of rotation. When the device parts 3, 4 are moved into the closed configuration, the device parts 3,4 are rotated towards each other, so that they also come to abut each other opposite to the hinge 5.

Figure 4b shows an alternative embodiment, in which the first device part 3' and the second device part 4' are, upon movement between the opened configuration and the closed configuration displaceable relative to each other in a displacement direction D perpendicular to the longitudinal axis. According to this embodiment, the device parts 3', 4' are displaced with respect to each other by means of a linear actuator 6. As such, the device parts 3' ,4' are set at a distance from each other in the opened configuration, e.g. on the left in figure 4b, and abut each other in the closed configuration, e.g. on the right in figure 4b.

Figure 4c shows a further alternative embodiment, comprising a first device part 3" that almost completely surrounds the plant passage, but which further comprises a second device part 4", which is completely removable from and connectable to the first device part 3", respectively, upon moving towards the opened configuration, e.g. on the left in figure 4c, and towards the closed configuration, e.g. on the right in figure 4c.

## Claims

1. Harvesting device (1) for harvesting horticultural produce (102), side shoots and/or leaves (103) from plant stems (101) in greenhouse cultivation, the device comprising:
- a guiding member (10), which defines a through plant passage (11) and which is configured to surround the plant stem at least partially in the plant passage during use, and
- a cutting member (20), which is attached to the guiding member and which is configured to cut peduncles (104) of the produce, the side shoots and/or petioles of the leaves that are attached to the plant stems, to separate them from the plant stems, wherein the plant stems are configured to be guided inside the guiding member upon relative movements of the harvesting device along the plant stem along a longitudinal axis (L-L), i.e. in an upward vertical direction, and
wherein the cutting member is configured to cut the peduncles, the side shoots and/or the petioles that pass the guiding member during movement of the harvesting device, **characterized in that,**
the harvesting device further comprises:
- a storage member (30), which surrounds the guiding member at least partially and which is configured to collect the produce that is separated from the plant stems and preferably configured to drop off the side shoots and leaves,
wherein the guiding member is crown-shaped, comprising:
- a plurality of tips (12), which are aligned upwardly and substantially parallel to the longitudinal axis and which are spaced around the circumference of the plant passage, and
- a respective tapered guiding valley (13) in between each two adjacent tips.

2. Harvesting device according to claim 1, wherein the storage member is rotatable relative to the guiding member and/or the cutting member about the longitudinal axis.

3. Harvesting device according to claim 1 or 2, further comprising a side aperture, which provides access to the plant passage in an access direction substantially perpendicular to the longitudinal axis to allow entry in and exit from the plant stem in the plant passage in the access direction.

4. Harvesting device according to any of the preceding claims, wherein the cutting member is, seen in the radial direction, spaced at a distance from the plant passage, and
wherein the distance is preferably selected in the range between 5 mm and 15 mm.

5. Harvesting device according to any of the preceding claims, wherein the guiding valleys are U-shaped or V-shaped, seen in the radial direction.

6. Harvesting device according to any of the preceding claims, wherein the cutting member comprises a respective cutting device (21) in each of the guiding valleys.

7. Harvesting device according to the preamble of claim 1, wherein the cutting member, e.g. each of the cutting devices, is an oscillatory cutting member, for example a sonic or ultrasonic cutting member.

8. Harvesting device according to the preamble of claim 1, wherein the cutting member, e.g. each of the cutting devices, is a rotary cutting member, for example a rotary knife.

9. Harvesting apparatus, comprising a base, the harvesting device according to any of the preceding claims and an actuator device, configured to move the harvesting device relative to the base to move the harvesting device relative to the plant stem along the longitudinal axis.

10. Method of harvesting horticultural produce (102), side shoots and leaves (103) from plant stems (101) in greenhouse cultivation by means of the harvesting device (1) according to any of the claims 1 - 8, comprising the steps of:
- surrounding the plant stem at least partially in the plant passage by the guiding member (10) of the harvesting device,
- moving the harvesting device along the plant stem along a longitudinal axis (L-L),
- guiding peduncles (104) of the produce, the side shoots and/or petioles of the leaves that are attached to the plant stem by the guiding member,
- cutting the peduncles, the side shoots and/or the leaves by means of the cutting member (20) of the harvesting device, to separate them from the plant stem, and
- collecting the produce that is separated from the plant stems in the storage member (30) of the harvesting device.
